# EUROPEAN PATENT SPECIFICATION

(11) **EP 1 861 963 B1**
(45) Date of publication and mention of the grant of the patent: **01.06.2011**
(21) Application number: 06739254.8
(22) Date of filing: 22.03.2006
(51) Int. Cl.: H04L 12/28, H04L 12/56

(54) **SYSTEM AND METHODS FOR IDENTIFYING NETWORK PATH PERFORMANCE**
SYSTEM UND VERFAHREN ZUR IDENTIFIZIERUNG VON NETZWERKPFADLEISTUNG
SYSTEME ET PROCEDES POUR IDENTIFIER LES PERFORMANCE D'UN CHEMIN DE RESEAU

(30) Priority: 22.03.2005 US 86007
(43) Date of publication of application: 05.12.2007
(73) Proprietor: Cisco Technology, Inc., San Jose, CA 95134 (US)
(72) Inventor: GUICHARD, James, N., Groton, Massachusetts 01450 (US); VASSEUR, Jean-Philippe, Dunstable, Massachusetts 01827 (US); NADEAU, Thomas, D., Hampton, New Hampshire 03842 (US); WARD, David, D., Somerset, Wisconsin 54025 (US)
(74) Representative: Kazi, Ilya
(86) International application number: PCT/US2006/010379
(87) International publication number: WO 2006/102398

(56) References cited:
- WO-A1-2004/056047
- WO-A1-2004/056047
- WO-A2-03/049342
- US-A1- 2002 078 464
- US-A1- 2002 145 981
- US-A1- 2002 165 957
- US-A1- 2003 133 443
- US-A1- 2004 210 892

## Description

### BACKGROUND

In a Virtual Private Networking (VPN) environment, a business or enterprise connects multiple remote sites, such as Local Area Networks (LANs) or other subnetwork as an integrated virtual entity which provides seamless security and transport such that each user appears local to each other user. In a conventional VPN, the set of subnetworks interconnect via one or more common public access networks operated by a service provider. Such a subnetwork interconnection is typically known as a core network, and includes service providers having a high speed backbone of routers and trunk lines. Each of the subnetworks and the core network have entry points known as edge routers, through which traffic ingressing and egressing from the network travels. The core network has ingress/egress points handled by nodes known as provider edge (PE) routers, while the subnetworks have ingress/egress points known as customer edge (CE) routers, discussed further in Internet Engineering Task Force (IETF) RFC 2547bis, concerning Virtual Private Networks (VPNs).

An interconnection between the subnetworks of a VPN, therefore, typically includes one or more core networks. Each of the core networks is usually one or many autonomous systems (AS), meaning that it employs and enforces a common routing policy among the nodes (routers) included therein. Accordingly, the nodes of the core networks often employ a protocol operable to provide high-volume transport with path based routing, meaning that the protocol not only specifies a destination (as in TCP/IP), but rather implements an addressing strategy that allows for unique identification of end points, and also allows specification of a particular routing path through the core network. One such protocol is the Multiprotocol Label Switching (MPLS) protocol, defined in Internet Engineering Task Force (IETF) RFC 3031. MPLS is a protocol that combines the label-based forwarding of ATM networks, with the packet-based forwarding of IP networks and then builds applications upon this infrastructure.

Traditional MPLS, and more recently Generalized MPLS (G-MPLS) networks as well, extend the suite of IP protocols to expedite the forwarding scheme used by conventional IP routers, particularly through core networks employed by service providers (as opposed to end-user connections or taps). Conventional routers typically employ complex and time-consuming route lookups and address matching schemes to determine the next hop for a received packet, primarily by examining the destination address in the header of the packet. MPLS has greatly simplified this operation by basing the forwarding decision on a simple label, via a so-called Label Switch Router (LSR) mechanism. Therefore, another major feature of MPLS is its ability to place IP traffic on a particular defined path through the network as specified by the label. Such path specification capability is generally not available with conventional IP traffic. In this way, MPLS provides bandwidth guarantees and other differentiated service features for a specific user application (or flow). Current IP-based MPLS networks are emerging for providing advanced services such as bandwidth-based guaranteed service (i.e. Quality of Service, or QOS), priority-based bandwidth allocation, and preemption services .

Accordingly, MPLS networks are particularly suited to VPNs because of their amenability to high speed routing and security over service provider networks, or so called Carrier's Carrier interconnections. Such MPLS networks, therefore, perform routing decisions based on path specific criteria, designating not only a destination but also the intermediate routers (hops), rather then the source/destination specification in IP which leaves routing decisions to various nodes and routing logic at each "hop" through the network.

US 2002/165957 discloses a method for building a network route map in which network operational characteristics are gathered by actively probing multiple network routes, and building the network route map based on the operational characteristics. A method of maintaining a traffic service level for data communicated by a computer network is disclosed in US 2002/145981.

### SUMMARY

Aspects of the invention are set out in the independent claims. Certain preferred features are set out in the dependent claims.

In a core network such as an MPLS network supporting a VPN environment, an interconnection of routers define a path through the core network from edge routers denoting the ingress and egress routers (points). Provider edge (PE) routers at the edge of the core network connect to customer edge (CE) routers at the ingress/egress to a customer network, such as a LAN subnetwork. The path through the core network may include many "hops" through provider (P) routers in the core from an ingress PE router to the egress PE router. Further, there are typically multiple possible paths through the core network. Conventional IP routing mechanisms may be unable to take advantage of the label switch routing allowing specification of a particular path. However, determination of an optimal path from among available paths is unavailable in conventional label switch path (LSP) routing. Accordingly, configurations of the invention are based, in part, on the observation that conventional routers do not identify an optimal path through the core network from the ingress PE router to the egress PE router. Determination of paths that satisfy a QOS or other delivery speed/bandwidth guarantee may be difficult or unavailable. Therefore, it can be problematic to perform routing decisions for QOS based traffic. It would therefore be beneficial to compute performance characteristics of particular paths through the core network to allow identification of an optimal path for traffic subject to a particular delivery guarantee or expectation.

Network performance attributes employed for core network diagnostics generally fall into two families of path characteristics, and the verification/diagnostics thereof, that are of interest when considering conventional network-based IP VPNs. The first is path verification in terms of basic connectivity that is detailed in copending U.S. Patent Application No. 11/048,077, filed on February 1, 2005, entitled "SYSTEM AND METHODS FOR NETWORK PATH DETECTION" (Atty. Docket No. CIS04-52(10418)).

The second group of characteristics of interest to a customer of a network-based VPN fall under the umbrella of "real-time" statistics. This can be loosely defined as the ability for a customer edge router (CE) to obtain real-time statistics related to a particular path used by that CE to carry its traffic across the core of the network-based VPN provider. Such attribute properties include (but are not limited to) delay (one way and round trip), jitter, and error rate (i.e.: packet loss/error). Currently these types of statistics are provided by some service providers, but are based largely on average values that are insufficient to enable the customer to compute real-time path characterization.

Conventional approaches may be able to provide information to the client of a network-based VPN service on an end-to-end basis e.g. from customer site to customer site. However, such conventional approaches may be unable to cover the computation of path jitter, delay and loss with the network-based VPN backbone network from the customer site perspective. This information must be obtained by the provider of the service and is usually delivered to the client by way of an average measurement over a given period of time, usually monthly.

Constantly updating (up-to-the-minute) values for various path characteristics such as delay and jitter may be required in order to qualify a particular path on a real-time basis so as to ease troubleshooting should some path characteristics such as the delay be detected as abnormally high, make instantaneous repairs to broken paths, or in order to choose alternate ones (i.e.: change routing behavior so as to obscure the network defect from the customer), or simply to obtain information as to whether the requested path attributes are being delivered by the core network at any given point in time. Conventional network path verification by the customer between their customer edge routers typically can only verify the end-to-end path using IP protocol packets. These provide important information about the overall end-to-end path, but do not provide any direct information about the core network paths between the provider's PE routers that actually carry the IP traffic between their sites. For this reason the customer may be unable to ascertain in which segment of the network a particular problem is located, or what specific path characteristics are being delivered at any particular point in time. Such information may, for example, be employed by a network-based IP customer to trigger appropriate QoS parameter setting adjustment on their PE to CE links, trigger a local link update and so on, should an SLA degradation cause be located on such links. Rather, such information is gathered by the Service Provider using MPLS-specific tools and algorithms to assure their accuracy and their efficiency when used to correct any defects detected by them. Disclosed herein is a method by which such MPLS-specific path characteristics may be gathered by the customers of a network-based IP VPN service.

Accordingly, configurations discussed herein substantially overcome such aspects of conventional path analysis by providing a system and method for aggregating performance characteristics for core network paths to allow computation of message traffic performance over each of the available candidate paths through the core for identifying an optimal core network path. Particular network traffic, or messages, include attributes indicative of performance, such as transport time, delay, jitter, and drop percentage over individual hops along the candidate path. The diagnostic processor parses these messages to identify the attributes corresponding to performance, and analyze the resulting parsed routing information to compute an expected performance, such as available bandwidth (e.g. transport rate) over the path. Messages including such attributes may include link state attribute (LSA) messages, diagnostic probe messages specifically targeted to enumerate such attributes, or other network suitable network traffic. In a particular configuration, the messages may be Path Verification Protocol (PVP) messages, discussed further in copending U.S. patent application No. 11/001,149, filed December 1, 2004, entitled "SYSTEM AND METHODS FOR DETECTING NETWORK FAILURE" (Atty. Docket No. CIS04-40(10083)).

Each of the attributes is typically indicative of performance characteristics between one or more hops through the core network. Accordingly, routing information gathered from the attributes is stored according to the particular hop to which it corresponds. Multiple instances of attributes across a particular hop (i.e. between two routers) are employed to compute performance characteristics for that hop (e.g. averaging the transport time of several messages between the nodes). Computation of performance of a particular path is achieved by aggregating, or summing, the performance characteristics for each hop along the path. For example, a timestamp attribute gathered from three successive messages transported between particular nodes may be averaged to provide an indication of typical or expected transport time between the nodes. Other attributes may be aggregated by averaging or otherwise computing deterministic performance characteristics from routing information representing a series of transmissions across a particular hop.

The gathered routing information may be obtained from traffic packets, from administrative messages such as Link State Attribute/Label Switched Path (LSA/LSP) messages employed by the path verification protocol, discussed above (CIS04-40). Such a series of hops define a path through the network, and identify favorable performance characteristics to enable routers to perform routing decisions to select an optimal path, or route, across which to send a particular packet or set of packets (messages). In general, therefore, the routing information is gathered from messages or packets having attributes indicative of the performance characteristics, including but not limited to transport time, delay, packet loss and jitter, to name several exemplary performance characteristics.

In further detail the method of identifying network routing paths disclosed in exemplary configurations below includes gathering network routing information indicative of performance characteristics between network nodes, and aggregating the identified routing information according to at least one performance characteristic. A diagnostic processor applies the aggregated routing information to routing decisions for network paths between the network nodes by identifying the network paths corresponding to favorable performance characteristics, in which the network paths are defined by a plurality of the network nodes.

Aggregating the routing information includes identifying messages having attributes indicative of performance characteristics, and parsing the attributes to extract the routing information corresponding to the performance characteristics. Such routing information typically corresponds to characteristics between a particular node and at least one other node, i.e. a network hop. The diagnostic processor stores or otherwise makes available the extracted routing information according to the performance characteristics between the respective nodes for use in subsequent routing decisions made by the router.

The routing information is applied to routing operations by first identifying a plurality of"important" network paths as candidate paths between a source and a destination, such as bottlenecks and ingress/egress points subject to heavy demand. The diagnostic processor computes, from the extracted routing information, and for each of the candidate paths, an aggregate performance indicative of message traffic performance between the source and destination for each of the candidate paths. Typically an average or mean expectation based on several samplings of a performance characteristic provide an expectation of future performance. The diagnostic processor then denotes a particular candidate path as an optimal path based on the computed aggregate performance. Having identified particular paths operable to transport significant message traffic, the diagnostic processor examines, on the identified particular paths, messages having the attributes indicative of performance characteristics, and scans (parses) the examined messages to retrieve the attributes.

Configurations discussed herein may employ a Quality of Service (QOS) criteria in routing decisions, in which applying the performance characteristics further includes specifying the attributes to be measured according to predetermined QOS criteria. The router then routes network traffic on paths having performance characteristics consistent with a particular QOS criteria, in which the performance characteristics typically including at least one of transport time, packet loss, packet delay and jitter. Configurations concerned with QOS of other guaranteed delivery obligation may
enumerate a set of quality of service (QOS) tier levels, the QOS levels indicative of an expected throughput performance, and associating each of the paths through the core network with a QOS level. The paths are then benchmarked or designated to compare the computed performance attributes to the associated QOS level to selectively route message traffic over a particular path.

In particular configurations, the messages employ the path verification protocol referenced above, in which the messages are diagnostic probe messages adapted to gather and report routing information. Accordingly, the diagnostic processor sends a set of diagnostic probe messages to the identified particular paths, in which the diagnostic probe messages operable to trigger sending of a probe reply, and analyzes, the probe reply to determine performance attributes of the particular path. Further, such probes allow concluding, if the probe reply is not received, a connectivity issue along the identified path. Otherwise the diagnostic processor organizes the received probe replies according to the node from which it was received, in which each of the nodes defining a hop along the path, and analyzes the organized probe replies corresponding to the sent diagnostic probe messages to compute routing characteristics of the hops along the path. In this manner, the diagnostic processor computes, based on a set of successively identified messages, expected performance between the respective nodes.

In alternate configurations, gathering network routing information includes receiving Link State Advertisement (LSA) messages, in which the LSA messages have attributes indicative of routing information, accumulating the gathered network routing information in a repository, and analyzing the network routing information to identify path characteristics.

Particular configurations, particularly those concerned with QOS driven throughput, tend to focus on transport time, or speed, as a performance characteristic. Such configurations, identify a plurality of network paths as candidate paths between a source and a destination, and apply the network routing information to a the plurality of paths between nodes to compute a propagation time between the selected nodes. The diagnostic processor computes, for each of the candidate paths, an aggregate transport time indicative of message traffic performance between the source and destination for each of the candidate paths, and denoting a particular candidate path as an optimal path based on the aggregate transport time.

Alternate configurations of the invention include a multiprogramming or multiprocessing computerized device such as a workstation, handheld or laptop computer or dedicated computing device or the like configured with software and/or circuitry (e.g., a processor as summarized above) to process any or all of the method operations disclosed herein as embodiments of the invention. Still other embodiments of the invention include software programs such as a Java Virtual Machine and/or an operating system that can operate alone or in conjunction with each other with a multiprocessing computerized device to perform the method embodiment steps and operations summarized above and disclosed in detail below. One such embodiment comprises a computer program product that has a computer-readable medium including computer program logic encoded thereon that, when performed in a multiprocessing computerized device having a coupling of a memory and a processor, programs the processor to perform the operations disclosed herein as embodiments of the invention to carry out data access requests. Such arrangements of the invention are typically provided as software, code and/or other data (e.g., data structures) arranged or encoded on a computer readable medium such as an optical medium (e.g., CD-ROM), floppy or hard disk or other medium such as firmware or microcode in one or more ROM or RAM or PROM chips, field programmable gate arrays (FPGAs) or as an Application Specific Integrated Circuit (ASIC). The software or firmware or other such configurations can be installed onto the computerized device (e.g., during operating system for execution environment installation) to cause the computerized device to perform the techniques explained herein as embodiments of the invention.

### BRIEF DESCRIPTION OF THE DRAWINGS

The foregoing and other objects, features and advantages of the invention will be apparent from the following description of particular embodiments of the invention, as illustrated in the accompanying drawings in which like reference characters refer to the same parts throughout the different views. The drawings are not necessarily to scale, emphasis instead being placed upon illustrating the principles of the invention.
Fig. 1 is a context diagram of a network communications environment depicting a Virtual Private Network (VPN) between subnetworks over a MPLS core network;
Fig. 2 is a flowchart of applying performance characteristics to computer an optimal path;
Fig. 3 is an example of applying the performance characteristics to computer an optimal path in the network of Fig. 1; and
Figs. 4-8 are a flowchart in further detail of applying performance characteristics.

### DETAILED DESCRIPTION

Network routing diagnostics in conventional IP networks are typically based on endpoint connectivity. Accordingly, conventional IP routing mechanisms are unable to take advantage of the label switch routing allowing specification of a particular path. Further, determination of an optimal path from among available paths may be unavailable in conventional label switch path (LSP) routing. Accordingly, configurations of the invention are based, in part, on the observation that conventional routers do not identify an optimal path through the core network from the ingress PE router to the egress PE router. Determination of paths that satisfy a QOS or other delivery speed/bandwidth guarantee may be difficult or unavailable. Therefore, it can be problematic to perform routing decisions for guaranteed delivery thresholds such as QOS based traffic. It would therefore be beneficial to compute performance characteristics of particular paths through the core network to allow identification of an optimal path for traffic subject to a particular delivery guarantee or expectation.

Accordingly, configurations discussed herein substantially overcome such aspects of conventional path analysis by providing a system and method for aggregating performance characteristics for core network paths to allow computation of message traffic performance over each of the available candidate paths through the core for identifying an optimal core network path. Further, a router or other connectivity device employing a diagnostic processor as defined herein employs a set of mechanisms allowing for the control of the subnetwork of a customer having rights to request such information as well as the polling rate so as to protect the PE from unreasonable overhead. Particular network traffic, or messages, include attributes indicative of performance, such as transport time, delay, jitter, and drop percentage. The diagnostic processor parses these messages to identify the attributes corresponding to performance, and analyzes the resulting parsed routing information to compute an expected performance, such as available bandwidth (e.g. transport rate) over the path. Messages including such attributes may include link state attribute (LSA) messages, diagnostic probe messages specifically targeted to enumerate such attributes, or other network suitable network traffic. Configurations discussed further below are directed to techniques for gathering the significant path characteristics for a network-based IP VPN. In particular, methods herein disclose how path jitter, packet loss and packet delay can be gathered by a customer of that service.

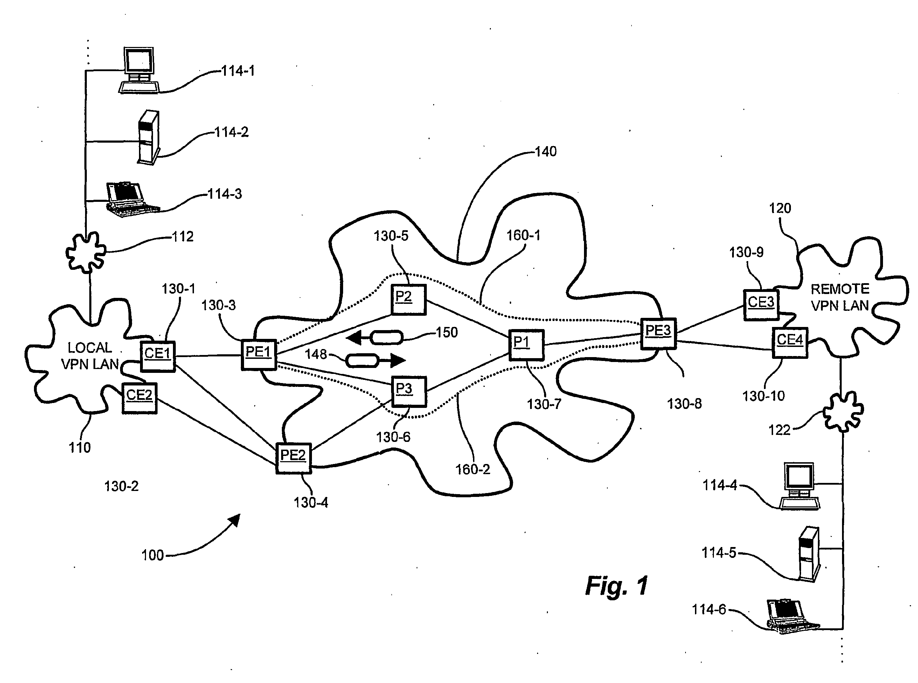

Fig. 1 is a context diagram of a network communications environment 100 depicting a Virtual Private Network (VPN) between subnetworks over a MPLS core network 140. Referring to Fig. 1, the environment 100 includes a local VPN subnetwork 110 (i.e. LAN) and a remote VPN subnetwork 120 interconnected by a core network 140. Each of the subnetworks 110, 120 serves a plurality of users 114-1..114-6 coupled to one or more prefixes 112, 122 within the subnetworks 110, 120, respectively. The subnetworks 110, 120 include customer edge routers CB1..CE4 (CE n, generally) connected to provider edge PE1..PE3 (PE n, generally) routers denoting ingress and egress points to the core network 140. The core network 140 includes provider routers P1..P3 (P n, generally) defining one or more paths 160-1..160-2 (160 generally) through the core network 140. Note that while the exemplary paths 160 identify a PE to PE route, methods disclosed herein are also applicable to PE-CE and CE-CE paths in alternate configurations.

In the context of an exemplary MPLS network serving a VPN, the following is a sample network topology used for the purposes of illustration. In the figure "CE" refers to a customer edge (i.e.: customer premises-based) router. A "PE" denotes a provider edge router, which demarks the edge of the provider network from that of the customer's network. Typically many CEs are attached to a single PE router, which takes on an aggregation function for many CEs. Each CE is attached to the provider network by at least one network link, and is often attached in multiple places forming a redundant or "multi-homed" configuration, although sometimes simply two network links provided by different "last mile" carriers may be used to attach the CE to the same PE. The "P" routers are the provider network's core routers. These routers comprise the provider's core network infrastructure. Collectively the various routers 130-1..130-10 define a plurality of nodes in the context of the MPLS environment.

Such an MPLS network typically begins and ends at the PE routers. Typically a dynamic routing protocol such as Border Gateway Protocol 4 (BGP-4), or static routing is used to route packets between the CE and PE. However, it is possible to run MPLS between the CE and PE devices. A simple MPLS topology illustrating this terminology is as follows:
CE---PE---P-P-PE---CE
There are two basic scenarios in which the mechanism described below applies. In the first case, the CE-PE links are running some non-MPLS protocol. In the second case, the CE-PE links are running the MPLS, such as either the Label Distribution Protocol (LDP) or BGP with label distribution, to distribute labels between each other. This type of configuration is typical when the customer is obtaining Carrier's Carrier services from the network-based VPN provider. The mechanism herein is applicable in either case.

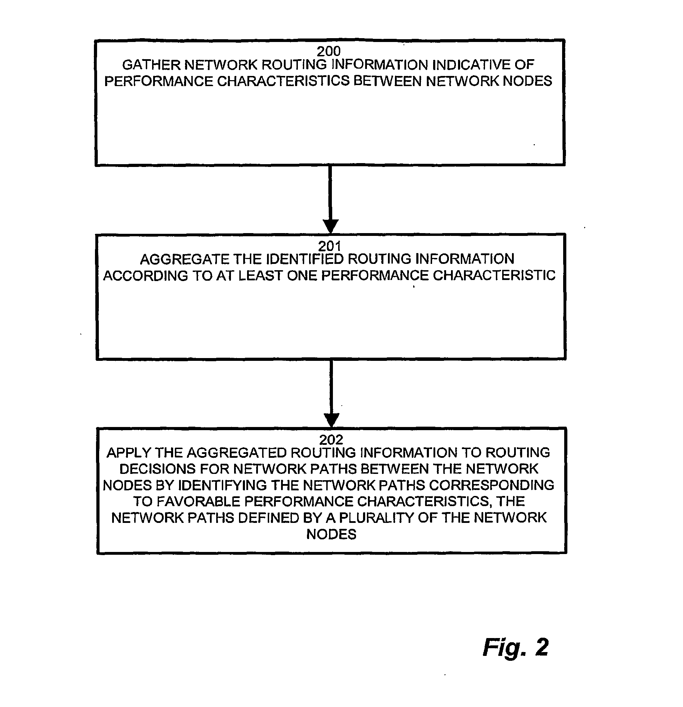

Fig. 2 is a flowchart for applying performance characteristics to compute an optimal path 160 in the network of Fig. 1. Referring to Figs. 1 and 2, the method of identifying network routing paths 160 as disclosed in exemplary configurations herein includes gathering network routing information indicative of performance characteristics between network nodes 130, as depicted at step 200. The routing information includes performance characteristics computed from the attributes of one or more messages 150, such as transport time, packet delay, packet jitter and packet loss. In the exemplary configuration, as described above, attributes are obtainable as responses to diagnostic probe messages 148, also known as path verification messages according to the path verification protocol (PVP). Alternatively, routing information (i.e. attributes) is obtainable from other messages 150, such as link state (LSA/LSP) messages and other routing traffic.

In the exemplary configuration, discussed further below, a client has the ability to identify a set of "important" destinations for which the gathering of the path attributes is required on a real-time basis (because of the necessity to measure the performance of a particular path). Not that the term "real-time" does not refer to the frequency at which path attributes are retrieved but is used to illustrate the fact that such information is gathered upon an explicit request of an authorized CE.

Having identified "important," or significant prefixes (which can be equal to the entire set of routes or just a subset of them), a client has the ability to trigger upon expiration of a jittered configurable timer or upon manual trigger an end-to-end data plane path attributes check for these prefixes.

The receiving router 130 aggregates the identified routing information according to at least one performance characteristic, such as transport time or packet loss, to consolidate the attributes and allow a deterministic criteria to be drawn (i.e. to compare apples to apples), as depicted at step 201. For example, a performance characteristic such as the propagation delay from node A to B is concerned with messages having a timestamp attribute denoting transmission from node A and arrival at node B. In particular configurations, a diagnostic probe message (i.e. a PVP message is employed). Upon expiration of the timer, or upon manual trigger, the client can initialize a request PVP message to the PE listing the set of path attributes to be measured. The PVP protocol is defined further in copending U.S. patent application No. 11/001,149 cited above.

Subsequent scheduling by a router 130 then applies the aggregated routing information to perform routing decisions for network paths 160 between the network nodes 130 by identifying the network paths corresponding to favorable performance characteristics, in which the network paths are defined by a plurality of the network nodes, as shown at step 202. The gathered attributes generally indicate performance characteristics between particular nodes 130. However, as indicated above, a path 160 across the core network 140 typically spans at least several nodes 130 and possible many. Accordingly, routing information corresponding to each "hop" along a path 160 is employed to compute the expected performance of a given path 150 by accumulating all the hops included in the path.

In the exemplary scenario, employing PVP, the CE starts a dynamic timer T. Upon expiration, if no PVP reply has been received for the PVP request, a further PVP request may be sent up to a maximum number N of consecutive attempts. This timer will be dynamically computed by the CE and will be based on the specific application requiring the path 160 characteristics.

Alternatively, on receipt of a PVP request 148, a PE should first verify whether the CE is authorized to send such request. If the CE request is not legal, a PVP error message is returned to the requesting CE. Then the PE should use the information contained within the request to obtain the relevant set of information (if possible). The PE achieves this by sending test traffic to the destination PE who is the next-hop exit point for a given VPN destination, and measures the attributes in question. For example, if measuring packet loss, the PE should send several messages 148 and count how many were replied too. In the case of jitter and delay, the PE should incorporate time stamp information from the test packets 148 as well as local information to keep track of time. In all cases, if the backbone of the network-based VPN service utilizes MPLS as its forwarding mechanism, it is preferable that MPLS-specific tools be used to measure these path 160 characteristics as to provide an accurate measure of the data plane.

If the request 148 can be satisfied, the result should be provided by means of a PVP reply to the CE client (note that the PVP server process is expected to be stateless and should delete the computed values after a predetermined time threshold. If the PVP server process at the PE cannot get the information then a PVP error message 150 should be returned along with an error code specifying the error root cause. Furthermore, the PE should also monitor the rate at which such requests are received on a per-PE basis and potentially silently drop the requests in excess, pace such requests or return an PVP error code message and dampen any further requests.

For example, one performance characteristic which is often carefully scrutinized is the transport time between nodes 130. In particular configurations, multiple routers 130 in a network synchronize their corresponding time clocks amongst themselves based on use of a synchronizing protocol such as the Network Time Protocol (NTP). The routers 130 flood the network 140 with network configuration messages 148 such as those based on the LSA/LSP to advertise status information of a network configuration change to other routers. When originating a respective network configuration message 148, a respective router generates a timestamp based on use of its synchronized clock for inclusion in a field of the network configuration message. Other routers 130 receiving the network configuration message identify a travel time attribute associated with the network configuration message over the network 140 by comparing a timestamp attribute (e.g., origination time) of a received network configuration message to their own time clock (e.g., the receiving router's time clock) to calculate a transmission time value indicating how long the network configuration message took to be conveyed over the network from the originator to a corresponding receiving node 130.

In this example, each router 130 receiving a respective network configuration message 148 identifies a travel time (or flooding time) associated with the network configuration message by comparing a respective timestamp (e.g., origination time) of the network configuration message to its own respective time clock (e.g., the receiving router's time clock) to calculate a transmission time value indicating how long the network configuration message took to be conveyed over the network from the originator router to a corresponding receiving router.

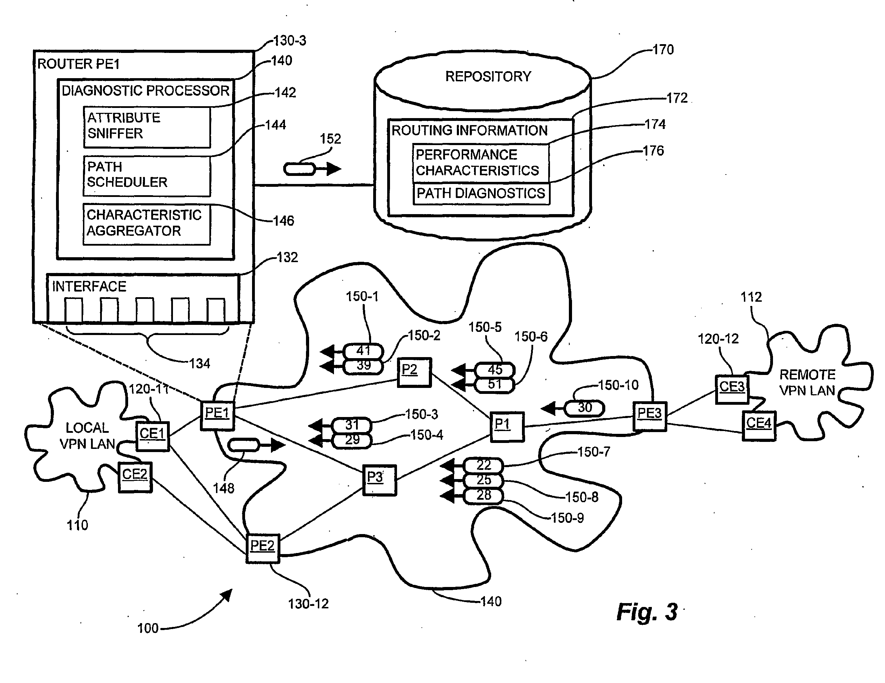

Fig. 3 is an example of applying the performance characteristics to compute an optimal path in the network of Fig. 1. Referring to Fig. 3, the VPN environment 100 of Fig. 1 is shown in greater detail including a plurality of messages 150..150-10 having performance attributes 152. As indicated above, the messages 150 may be sent in response to a variety of triggers. In the exemplary configuration, diagnostic probe messages 148 specifically for eliciting the messages 150 and corresponding attributes 152 are employed. Such diagnostic probe messages 148 may be part of a path verification protocol (PVP), as discussed further in the copending patent application discussed above. Also, such messages 150 may be Link Status (LSA/LSP) messages, or other message traffic which includes performance attributes 152. In each of the above cases, attributes 152 indicative of performance characteristics are received by the router PE1 130-3.

Exemplary router PE1 includes an interface 132 having a plurality of ports 134 for receiving and forwarding message traffic through the network 140 in the normal course of routing operations. The router PE1 also includes a diagnostic processor 140 for performing path diagnostics and validation as discussed herein. The diagnostic processor 140 includes an attribute sniffer 142 operable to identify messages 150 having attributes relevant to performance, and also operable to retrieve the attributes 152 in a non-destructive manner which does not affect extraneous routing operations. The diagnostic processor 140 also includes a characteristic aggregator 146, for analyzing the attributes of multiple messages 150 to identify trends, and a path scheduler 144 for applying the path characteristics to routing decisions based on criteria such as QOS guarantees. For example, having identified a path 160 which provides transport across the core network 140 in 200ms, for example, the path scheduler 144 (scheduler) may perform routing decisions to employ that path 160 for message traffic associated with a QOS guarantee of, say, 210ms. Therefore, optimal routing decisions which route traffic on a path sufficient to satisfy such QOS requirements is obtained, yet the scheduler 144 need not route such traffic on a 100ms path 160 which may be needed for more critical traffic.

**TABLE I : PERFORMANCE CHARACTERISTICS**

| MESSAGE | NODE_1 | NODE_2 | ATTRIBUTE |
|---|---|---|---|
| 150-1 | PE1 | P2 | 41ms |
| 150-2 | PE1 | P2 | 39ms |
| 150-3 | PE1 | P3 | 31ms |
| 150-4 | PE1 | P3 | 29ms |
| 150-5 | P2 | P1 | 45ms |
| 150-6 | P2 | P1 | 51ms |
| 150-7 | P3 | P1 | 22ms |
| 150-8 | P3 | P1 | 25ms |
| 150-9 | P3 | P1 | 28ms |
| 150-10 | P1 | PE3 | 30ms |

The attribute sniffer 142 gathers attributes 152 for storage in the repository 170. The repository 170 stores the attributes 152 as routing information 172 according to normalized criteria such as paths, hops, and routers 130, as applicable to the performance characteristic in question. An exemplary set of performance characteristics 174 is shown in Table I, which stores transport times between various nodes 130. Thus, successive trials of performance characteristics 174 (i.e. attributes), obtained from the various hops between nodes 150-1..150-10 are stored in Table I along with the attribute values, such as transport time in the given example.

The characteristic aggregator 146 employs the performance characteristics 174 to compute path diagnostics 176 (characteristics), representing the deterministic expectations computed from the available attributes 152. As shown in Table II, an expected transport time for each hop is computable by averaging the gathered attribute 152 obtained for a series of hops between two particular nodes 130. The aggregate performance of a path 160 is computed by summing each average hop along the path 160, discussed further below.

**TABLE II: PATH DIAGNOSTICS**

| PATH | ENDPOINT_1 | ENDPOINT_2 | PERFORMANCE CHARACTERISITIC |
|---|---|---|---|
| 160-1 | PE1 | PE3 | 120ms |
| 160-2 | PE1 | PE3 | 85ms |

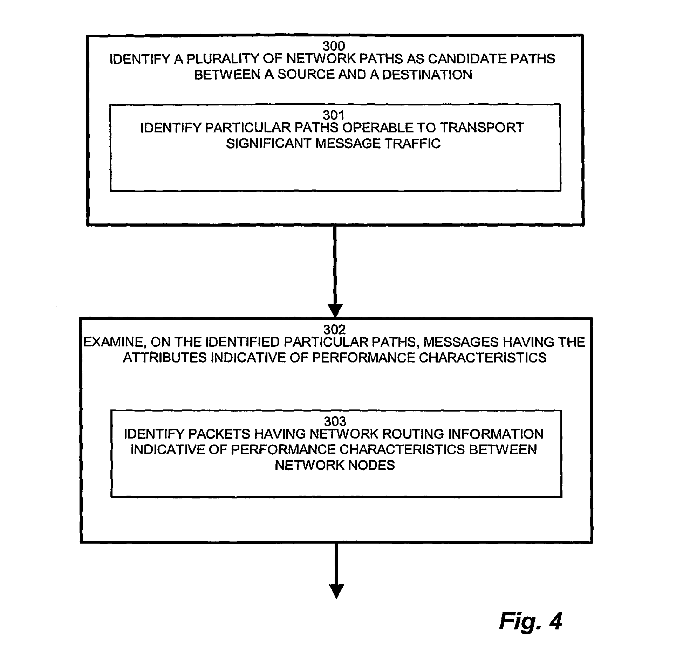

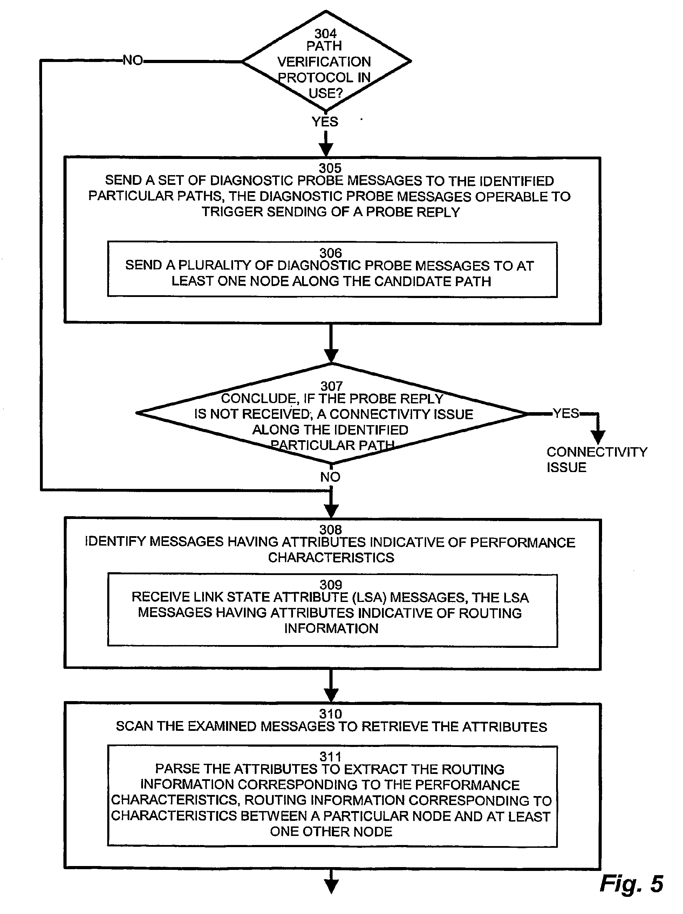

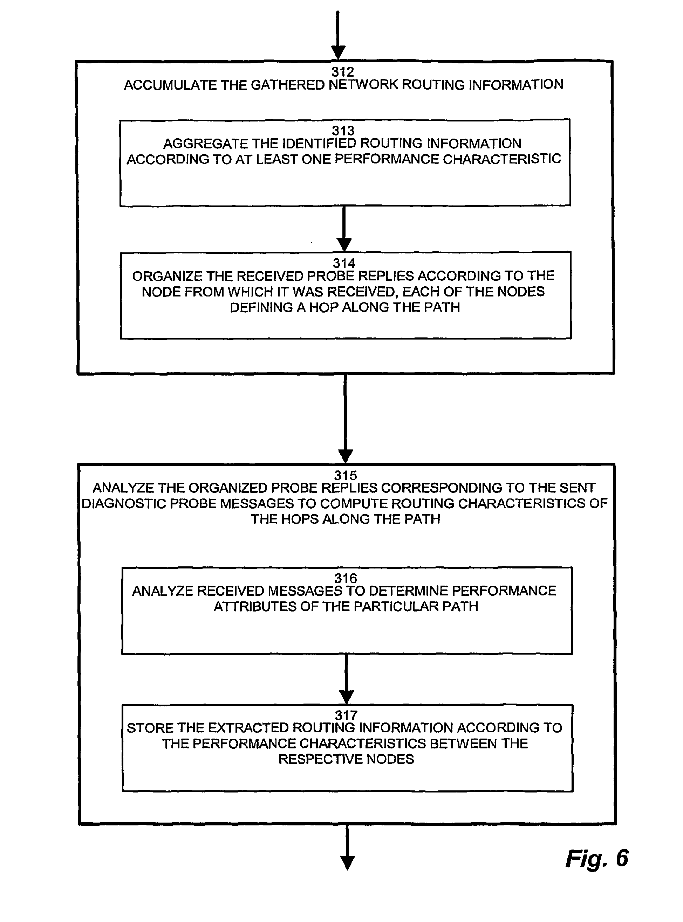

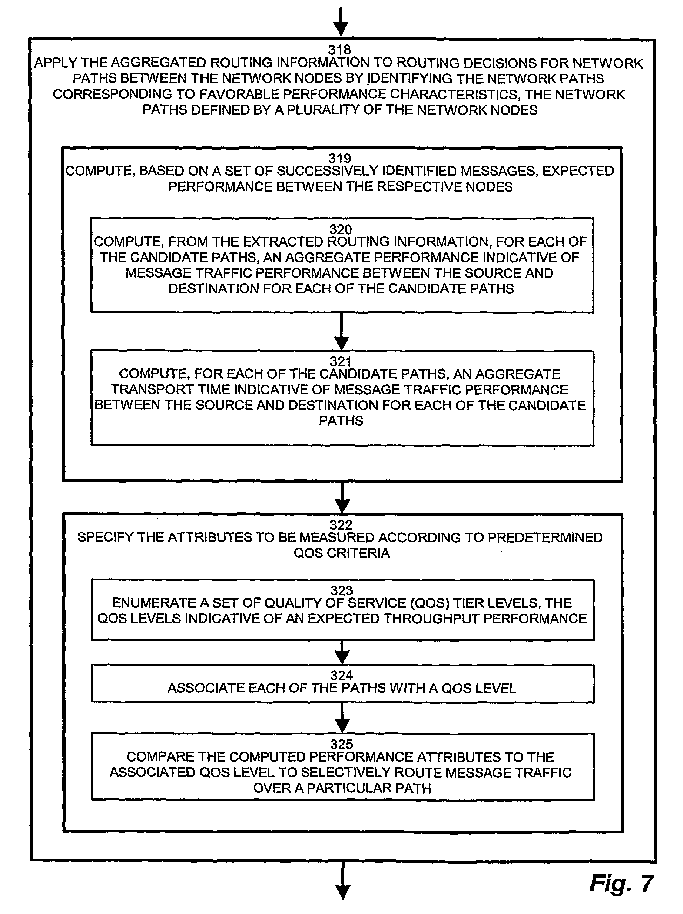

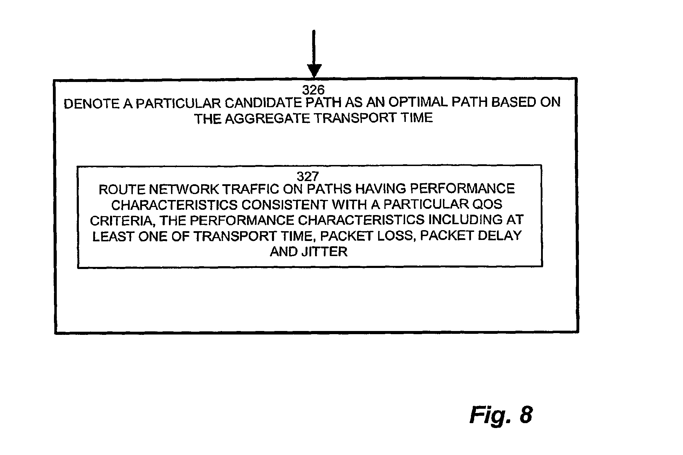

Figs. 4-8 are a flowchart of applying performance characteristics in further detail using the exemplary network of Fig. 3 and the routing information of Tables I and II, above. Referring to Figs. 1, 3 and 8, as well as tables I and II, the diagnostic processor 140, configured in router PE1, is operable for performing path diagnostics as discussed further below. Such a diagnostic processor 140 is also applicable to the other routers 130-1..130-10, however is illustrated from the perspective of router PE1 alone for simplicity. Accordingly, the diagnostic processor 140 identifies a plurality of network paths as candidate paths 160 between a source and a destination, such as the paths 160-1, 160-2 between PE1 and PE3 130-3, 130-8, as depicted at step 300. In the exemplary configuration, such a path 160 denotes a PE-PE interconnection across the core network 140 and therefore involves identifying a plurality of nodes 130 along one or more candidate paths 160 through the core network 140 for monitoring and analysis. Typically, the diagnostic processor 140 identifies particular paths 130 operable to transport significant message traffic, as depicted at step 301, therefore avoiding the burden of including low volume or an excessive number of non-contentious router connections.

The attribute sniffer 142, or other process operable to receive and examine network message (packets) 150 examines, on the identified particular paths 160, messages 150 having the attributes 152 indicative of performance characteristics, as shown at step 302. Accordingly, the attribute sniffer 142 identifies packets 152 having network routing information indicative of performance characteristics between network nodes 130, as disclosed at step 303. As indicated above, such attributes include performance related metrics or variables such as the propagation (i.e. transport) time, delay, loss and jitter, to name several. Such identification may be by virtue of a diagnostic protocol such as PVP, or by other parsing or scanning mechanism such as identifying protocol control sequences employed by the underlying network protocol (i.e. MPLS or TCP/IP).

A check is performed, at step 304, to determine if a protocol such as PVP is in use, as depicted at step 304. If PVP is in use, then the received (i.e. sniffed) messages are diagnostic probe messages adapted to gather and report routing information, as depicted at step 305. Routers 130 enabled with such diagnostic probe capability (i.e. PVP enabled) employ diagnostic probe messages 148 on the identified particular paths 160, in which the diagnostic probe messages 148 are operable to trigger sending of a probe reply 150 from other destination routers 130. Accordingly, the router PE1 sends a plurality of diagnostic probe messages 148 to at least one node 130 along the candidate path, as shown at step 306. Probe messages 148 evoke a responsive probe reply 150 from the router 130 on the candidate path 160, and accordingly, the diagnostic processor 140 concludes, if the probe reply is not received, a connectivity issue along the identified particular path 160, as shown at step 307.

Otherwise, the characteristic aggregator 146, responsive to the attribute sniffer 142, identifies the incoming messages 150 having attributes indicative of performance characteristics, as shown at step 308. As the incoming messages 150 may be probe replies, LSA, or other attribute bearing messages, gathering the routing information may result in the characteristic aggregator 146 receiving various messages such as Link State Advertisement (LSA) messages, probe messages, or router traffic messages, in which the messages include the attributes indicative of routing information, as shown at step 309.

Accordingly, the characteristic aggregator 146 scans the examined messages to retrieve the attributes 152, as depicted at step 310. Scanning involves parsing the attributes to extract the routing information corresponding to the performance characteristics, as shown at step 309. Since the attributes are gathered by the messages 150 as they traverse the nodes 130 of the network, the attributes contain routing information corresponding to characteristics between a particular node 130 and one or more other nodes 130. The aggregator 146 accumulates the gathered network routing information from the parsed attributes, as shown at step 312. Accumulating in this manner includes aggregating the identified routing information according to one or more of the performance characteristics, as depicted at step 312, and organizing the received attributes 152, such as attributes parsed from diagnostic probe replies 150, according to the node 130 from which it was received, each of the nodes defining a hop along the path 160, as depicted at step 313. A series of messages 150 results in an aggregation of attributes arranged by performance characteristics 174 and hops, enabling further processing on a path basis, as shown in Table 1. The aggregator 146 analyzes the attributes 152 from the organized probe replies 150 corresponding to the sent diagnostic probe messages 148 to compute routing characteristics of the hops along the path, as shown at step 314.

The aggregator 146 then analyzes the performance characteristics 174 specified by the attributes 152 to determine performance attributes of a particular path 160, as depicted at step 315. The aggregator 146 analyzes the network routing 172 information to identify path 160 characteristics applicable to an entire path through the core 140, thus encompassing the constituent hops includes in that path, as disclosed at step 316. The aggregator stores the extracted, aggregated routing information 172 as path diagnostics 176 (Table II) according to the performance characteristics 174, between the respective nodes 130, in the repository 170 as depicted at step 317.

The path scheduler 144 applies the aggregated routing information 172 to routing decisions for network paths 160 between the network nodes 130 by identifying the network paths 160 corresponding to favorable performance characteristics, in which the network paths 160 are each defined by a plurality of the network nodes 130, as disclosed at step 318. Therefore, the performance characteristics of each of the intermodal hops of Table I, for example, determine the optimal path by adding or summing the characteristics of the respective hops.

Therefore, the scheduler 144 applies the routing information 172 by computing, based on a set of successively identified messages 150, expected performance between the respective nodes 130, as depicted at step 319. The scheduler 144 computes, from the extracted routing information 172, for each of the candidate paths 160, an aggregate performance indicative of message traffic performance between a particular source and destination (i.e. typically PE routers 130) for each of the candidate paths 160, as shown at step 320. In the exemplary scenario in Fig. 3 and tables I and II, the path scheduler 144 computes, for each of the candidate paths 160-1 and 160-2, an aggregate transport time indicative of message traffic performance between the source and destination (i.e. PE1 to PE3) for each of the candidate paths 160. In other words, using transport time as the performance characteristic, the path scheduler 144 applies the network routing information 172 to the plurality of paths 160 between nodes to compute a propagation time between the selected nodes PE1 and PE3.

To compute the optimal path in a particular context (i.e. guaranteed delivery scenario), guaranteed delivery parameters are applied by specifying the attributes to be measured according to predetermined QOS criteria, as depicted at step 322. The QOS criteria indicate which performance characteristics are applied and the particular performance values required, such as transport time. Accordingly, the path scheduler 144 enumerates a set of quality of service (QOS) tier levels, in which the QOS levels are indicative of an expected throughput performance, as shown at step 323, and associates each of the candidate paths 160 with a QOS level, as depicted at step 324. The path attributes allow the path scheduler 144 to qualify the paths as satisfying a particular QOS level, such as a transport time from PE1 to PE3 in 100ms, for example. The path scheduler compares the computed performance attributes to the associated QOS level to selectively the route message traffic over a particular path 160, as disclosed at step 325.

The path scheduler 144 may then route network traffic on paths 160 having performance characteristics consistent with a particular QOS criteria, the performance characteristics including at least one of transport time, packet loss, packet delay and jitter, as depicted at step 326. Therefore, in the example in Fig. 3, the path scheduler 144 denotes a particular candidate path 160 as an optimal path based on the aggregate transport time, as depicted at step 327. For example, the path 160-2 would be chosen for the QOS traffic requiring 100ms transport from PE1-PE3 because path 160-1 exhibits path diagnostics of 120ms and cannot support such performance.

Those skilled in the art should readily appreciate that the programs and methods for identifying network routing paths as defined herein are deliverable to a processing device in many forms, including but not limited to a) information permanently stored on non-writeable storage media such as ROM devices, b) information alterably stored on writeable storage media such as floppy disks, magnetic tapes, CDs, RAM devices, and other magnetic and optical media, or c) information conveyed to a computer through communication media, for example using baseband signaling or broadband signaling techniques, as in an electronic network such as the Internet or telephone modem lines. The operations and methods may be implemented in a software executable object or as a set of instructions embedded in a carrier wave. Alternatively, the operations and methods disclosed herein may be embodied in whole or in part using hardware components, such as Application Specific Integrated Circuits (ASICs), Field Programmable Gate Arrays (FPGAs), state machines, controllers or other hardware components or devices, or a combination of hardware, software, and firmware components.

While the system and method for identifying network routing paths has been particularly shown and described with references to embodiments thereof, it will be understood by those skilled in the art that various changes in form and details may be made therein without departing from the scope of the invention encompassed by the appended claims. Accordingly, the present invention is not intended to be limited except by the following claims.

## Claims

1. A method of identifying network routing paths comprising:
gathering network routing information indicative of performance characteristics between network nodes (130);
aggregating the identified routing information according to at least one performance characteristic; and
applying the aggregated routing information to routing decisions for network paths (160) between the network nodes by identifying the network paths corresponding to favourable performance characteristics, the network paths defined by a plurality of the network nodes; **characterized in that** the method further comprises:
specifying the performance characteristics to be measured according to predetermined Quality of Service, QOS, criteria;
the gathering step comprising identifying a plurality of network paths (160-1, 160-2) as candidate paths between a source (130-3) and a destination (130-8);
the aggregating step comprising computing, from the routing information, for each of the candidate paths, an aggregate performance indicative of message traffic performance between the source and destination on that candidate path; and
the applying step comprising routing network traffic on a candidate path having an aggregate performance consistent with a particular QOS criteria.

2. The method of claim 1 wherein aggregating further comprises:
identifying messages having attributes indicative of performance characteristics;
parsing the attributes to extract the routing information corresponding to the performance characteristics, routing information corresponding to characteristics between a particular node and at least one other node; and
storing the extracted routing information according to the performance characteristics between the respective nodes.

3. The method of claim 1, the performance characteristics including at least one of transport time, packet loss, packet delay and jitter.

4. The method of claim 1 wherein gathering further comprises:
identifying particular paths operable to transport significant message traffic;
examining, on the identified particular paths, messages having the attributes indicative of performance characteristics; and
scanning the examined messages to retrieve the attributes.

5. The method of claim 4 wherein the messages are diagnostic probe messages adapted to gather and report routing information, further comprising:
sending a set of diagnostic probe messages to the identified particular paths, the diagnostic probe messages operable to trigger sending of a probe reply;
analyzing, if a probe reply is received, the probe reply to determine performance attributes of the particular path; and
concluding, if the probe reply is not received, a connectivity issue along the identified particular path.

6. The method of claim 1 further comprising:
identifying a plurality of nodes along a candidate path;
sending a plurality of diagnostic probe messages to at least one node along the candidate path;
organizing the received probe replies according to the node from which it was received, each of the nodes defining a hop along the path; and
analyzing the organized probe replies corresponding to the sent diagnostic probe messages to compute routing characteristics of the hops along the path.

7. The method of claim 6 further comprising computing, based on a set of successively identified messages, expected performance between the respective nodes.

8. The method of claim 7 wherein gathering network routing information further includes:
receiving Link State Advertisement LSA messages, the LSA messages having attributes indicative of routing information; and
accumulating the gathered network routing information; and analyzing the network routing information to identify path characteristics.

9. The method of claim 1 further comprising:
identifying a plurality of network paths as candidate paths between a source and a destination;
applying the network routing information to the plurality of paths between nodes to compute a propagation time between the selected nodes;
computing, for each of the candidate paths, an aggregate transport time indicative of message traffic performance between the source and destination for each of the candidate paths; and
denoting a particular candidate path as an optimal path based on the aggregate transport time.

10. The method of claim 1 wherein applying further comprises:
enumerating a set of quality of service, QOS, tier levels, the QOS levels indicative of an expected throughput performance;
associating each of the paths with a QOS level; and
comparing the computed performance attributes to the associated QOS level to selectively route message traffic over a particular path.

11. A data communications device (130-3) having a diagnostic processor (140) for analyzing network routing paths comprising:
means for gathering network routing information indicative of performance characteristics between network nodes (130);
means for aggregating the identified routing information according to at least one performance characteristic; and
means for applying the aggregated routing information to routing decisions for network paths (160) between the network nodes by identifying the network paths corresponding to favourable performance characteristics, the network paths defined by a plurality of the network nodes; **characterized in that** the device further comprises:
means for specifying the performance characteristics to be measured according to predetermined Quality of Service, QOS, criteria;
the gathering means comprising means for identifying a plurality of network paths (160-1, 160-2) as candidate paths between a source (130-3) and a destination (130-8);
the aggregating means comprising means for computing, from the routing information, for each of the candidate paths, an aggregate performance indicative of message traffic performance between the source and destination on that candidate path; and
the applying means comprising means for routing network traffic on a candidate path having an aggregate performance consistent with a particular QOS criteria.

12. A data communications device according to claim 11, comprising:
an attribute sniffer (142) operable to gather the network routing information;
a characteristic aggregator (146) operable to aggregate the identified routing information; and
a path scheduler (144) operable to apply the aggregated routing information to routing decisions for network paths.

13. The data communications device of claim 11 further comprising:
means for parsing the attributes to extract the routing information corresponding to the performance characteristics, routing information corresponding to characteristics between a particular node and at least one other node, further comprising a repository operable to store the extracted routing information according to the performance characteristics between the respective nodes.

14. The data communications device of claim 11 wherein the performance characteristics include at least one of transport time, packet loss, packet delay and jitter.

15. The data communications device of claim 11 wherein the messages are diagnostic probe messages according to a predetermined protocol adapted to gather and report routing information, the device comprising:
means for identifying particular paths operable to transport significant message traffic;
means for sending a set of diagnostic probe messages to the identified particular paths, the diagnostic probe messages operable to trigger sending of a probe reply;
means for analyzing, if a probe reply is received, the probe reply to determine performance attributes of the particular path; and
means for concluding, if the probe reply is not received, a connectivity issue along the identified particular path.

16. The data communications device of claim 11 further comprising:
means for identifying a plurality of nodes along a candidate path;
means for sending a plurality of diagnostic probe messages to at least one node along the candidate path;
means for organizing the received probe replies according to the node from which it was received, each of the nodes defining a hop along the path;
means for analyzing the organized probe replies corresponding to the sent diagnostic probe messages to compute routing characteristics of the hops along the path; and
means for computing, based on a set of successively identified messages, expected performance between the respective nodes.

17. The data communications device of claim 11 further comprising:
means for identifying a plurality of network paths as candidate paths between a source and a destination;
means for applying the network routing information to the plurality of paths between nodes to compute a propagation time between the selected nodes;
means for computing, for each of the candidate paths, an aggregate transport time indicative of message traffic performance between the source and destination for each of the candidate paths; and
means for denoting a particular candidate path as an optimal path based on the aggregate transport time.

18. The data communications device of claim 11 further comprising:
means for enumerating a set of quality of service, QOS, tier levels, the QOS levels indicative of an expected throughput performance;
means for associating each of the paths with a QOS level;
means for comparing the computed performance attributes to the associated QOS level to selectively route message traffic over a particular path; and
means for performing routing decisions for routing the message traffic according to a QOS level attributable to the message traffic.

19. A computer program product having a computer readable medium operable to store computer program logic embodied in computer program code encoded thereon for identifying network routing paths comprising:
computer program code for performing a method according to any of claims 1 to 10.

## Patentansprüche

1. Verfahren zum Identifizieren von Netzwerk-Routing-Pfaden, das umfasst:
Erfassen von Netzwerk-Routing-Informationen, die Leistungsmerkmale zwischen Netzwerkknoten (130) angeben;
Aggregieren der identifizierten Routing-Informationen gemäß wenigstens einem Leistungsmerkmal; und
Anwenden der aggregierten Routing-Informationen auf Routing-Entscheidungen für Netzwerk-Pfade (160) zwischen den Netzwerkknoten durch Identifizieren der Netzwerk-Pfade entsprechend günstigen Leistungsmerkmalen, wobei die Netzwerk-Pfade von einer Vielzahl von Netzwerkknoten definiert werden;
**dadurch gekennzeichnet, dass** das Verfahren des Weiteren umfasst:
Spezifizieren der Leistungsmerkmale, die gemäß vorgegebenen Dienstgüte-Kriterien zu messen sind;
wobei der Schritt des Erfassens das Identifizieren einer Vielzahl von Netzwerk-Pfaden (160-1, 160-2) als Kandidatenpfade zwischen einer Quelle (130-3) und einem Ziel (130-8) umfasst;
wobei der Schritt des Aggregierens das Berechnen, aus den Routing-Informationen, für jeden der Kandidatenpfade, einer Gesamtleistung umfasst, die Nachrichtenverkehrsleistung zwischen der Quelle und dem Ziel auf diesem Kandidatenpfad anzeigt; und
wobei der Schritt des Anwendens das Routen von Netzwerkverkehr auf einem Kandidatenpfad umfasst, der eine Gesamtleistung hat, die mit einem bestimmten Dienstgüte-Kriterium übereinstimmt.

2. Verfahren nach Anspruch 1, wobei das Aggregieren des Weiteren umfasst:
Identifizieren von Nachrichten, die Attribute aufweisen, welche Leistungsmerkmale angeben;
Parsen der Attribute, um die Routing-Informationen entsprechend den Leistungsmerkmalen zu extrahieren, wobei die Routing-Informationen Merkmalen zwischen einem bestimmten Knoten und wenigstens einem weiteren Knoten entsprechen; und
Speichern der extrahierten Routing-Informationen gemäß den Leistungsmerkmalen zwischen den entsprechenden Knoten.

3. Verfahren nach Anspruch 1, wobei die Leistungsmerkmale wenigstens eines aufweisen von Transportzeit, Paketverlust, Paketverzögerung und Jitter.

4. Verfahren nach Anspruch 1, wobei das Erfassen des Weiteren umfasst:
Identifizieren bestimmter Pfade, die so betreibbar sind, dass sie signifikanten Nachrichtenverkehr transportieren;
Prüfen, auf den identifizierten bestimmten Pfaden, von Nachrichten, die die Attribute haben, die Leistungsmerkmale angeben; und
Abtasten der geprüften Nachrichten, um die Attribute abzurufen.

5. Verfahren nach Anspruch 4, wobei die Nachrichten Diagnosetestnachrichten sind, die zum Erfassen und Berichten von Routing-Informationen ausgelegt sind, wobei das Verfahren des Weiteren umfasst:
Senden eines Satzes von Diagnosetestnachrichten an die identifizierten bestimmten Pfade, wobei die Diagnosetestnachrichten so betreibbar sind, dass sie das Senden einer Testantwort auslösen;
Analysieren, wenn eine Testantwort empfangen wird, der Testantwort, um Leistungsattribute des bestimmten Pfads zu bestimmen; und
Folgern, wenn die Testantwort nicht empfangen wird, eines Verbindungsproblems entlang des identifizierten bestimmten Pfads.

6. Verfahren nach Anspruch 1, das des Weiteren umfasst:
Identifizieren einer Vielzahl von Knoten entlang eines Kandidatenpfads;
Senden einer Vielzahl von Diagnosetestnachrichten an wenigstens einen Knoten entlang des Kandidatenpfads;
Organisieren der empfangenen Testantworten gemäß dem Knoten, von dem sie empfangen wurden, wobei jeder der Knoten einen Hop entlang des Pfads definiert; und
Analysieren der organisierten Testantworten entsprechend der gesendeten Diagnosetestnachrichten, um Routing-Merkmale der Hops entlang des Pfads zu berechnen.

7. Verfahren nach Anspruch 6, das des Weiteren das Berechnen erwarteter Leistung zwischen den entsprechenden Knoten basierend auf einem Satz aufeinanderfolgend identifizierter Nachrichten umfasst.

8. Verfahren nach Anspruch 7, wobei das Erfassen von Netzwerk-Routing-Informationen des Weiteren umfasst:
Empfangen von Link State Advertisement, LSA, (Verbindungszustands-Ankündigungs) -Nachrichten, wobei die LSA-Nachrichten Attribute haben, die Routing-Informationen angeben; und
Sammeln der erfassten Netzwerk-Routing-Informationen; und
Analysieren der Netzwerk-Routing-Informationen, um Pfadeigenschaften zu identifizieren.

9. Verfahren nach Anspruch 1, das des Weiteren umfasst:
Identifizieren einer Vielzahl von Netzwerk-Pfaden als Kandidatenpfade zwischen einer Quelle und einem Ziel;
Anwenden der Netzwerk-Routing-Informationen auf die Vielzahl von Pfaden zwischen Knoten, um eine Laufzeit zwischen den ausgewählten Knoten zu berechnen;
Berechnen, für jeden der Kandidatenpfade, einer Gesamttransportzeit, die Nachrichtenverkehrsleistung zwischen der Quelle und dem Ziel für jeden der Kandidatenpfade angibt; und
Benennen eines bestimmten Kandidatenpfads als optimalen Pfad basierend auf der Gesamttransportzeit.

10. Verfahren nach Anspruch 1, wobei das Anwenden des Weiteren umfasst:
Zählen eines Satzes von Dienstgüte-Schichtebenen, wobei die Dienstgüte-Ebenen eine erwartete Durchsatzleistung angeben;
Assozüeren jedes der Pfade mit einer Dienstgüte-Ebene; und
Vergleichen der berechneten Leistungsattribute mit der assoziierten Dienstgüte-Ebene, um Nachrichtenverkehr über einen bestimmten Pfad selektiv zu routen.

11. Datenkommunikations-Vorrichtung (130-3) mit einem Diagnoseprozessor (140) zum Analysieren von Netzwerk-Routing-Pfaden, die aufweist:
eine Einrichtung zum Erfassen von Netzwerk-Routing-Informationen, die Leistungsmerkmale zwischen Netzwerkknoten (130) angeben;
eine Einrichtung zum Aggregieren der identifizierten Routing-Informationen gemäß wenigstens einem Leistungsmerkmal; und
eine Einrichtung zum Anwenden der aggregierten Routing-Informationen auf Routing-Entscheidungen für Netzwerk-Pfade (160) zwischen den Netzwerkknoten durch Identifizieren der Netzwerk-Pfade entsprechend günstigen Leistungsmerkmalen, wobei die Netzwerk-Pfade von einer Vielzahl der Netzwerkknoten definiert werden;
**dadurch gekennzeichnet, dass** die Vorrichtung des Weiteren aufweist:
eine Einrichtung zum Spezifizieren der Leistungsmerkmale, die gemäß vorgegebenen Dienstgüte-Kriterien zu messen sind;
wobei die Einrichtung zum Erfassen eine Einrichtung zum Identifizieren einer Vielzahl von Netzwerk-Pfaden (160-1, 160-2) als Kandidatenpfade zwischen einer Quelle (130-3) und einem Ziel (130-8) aufweist;
wobei die Einrichtung zum Aggregieren eine Einrichtung zum Berechnen, aus den Routing-Informationen für jeden der Kandidatenpfade, einer Gesamtleistung aufweist, die Nachrichtenverkehrsleistung zwischen der Quelle und dem Ziel auf diesem Kandidatenpfad anzeigt; und
wobei die Einrichtung zum Anwenden eine Einrichtung zum Routen von Netzwerkverkehr auf einem Kandidatenpfad aufweist, der eine Gesamtleistung hat, die mit einem bestimmten Dienstgüte-Kriterium übereinstimmt.

12. Datenkommunikations-Vorrichtung nach Anspruch 11, die aufweist:
einen Attribut-"Schnüffler" (sniffer) (412), der so betreibbar ist, dass er die Netzwerk-Routing-Informationen erfasst;
einen Merkmals-Aggregator (146), der so betreibbar ist, dass er die identifizierten Routing-Informationen aggregiert; und
einen Pfad-Scheduler (144), der so betreibbar ist, dass er die aggregierten Routing-Informationen auf Routing-Entscheidungen für Netzwerk-Pfade anwendet.

13. Datenkommunikations-Vorrichtung nach Anspruch 11, die des Weiteren aufweist:
eine Einrichtung zum Parsen der Attribute, um die Routing-Informationen entsprechend den Leistungsmerkmalen zu extrahieren, wobei die Routing-Informationen Merkmalen zwischen einem bestimmten Knoten und wenigstens einem weiteren Knoten entsprechen, und die des Weiteren einen Speicher aufweist, der so betreibbar ist, dass er die extrahierten Routing-Informationen gemäß den Leistungsmerkmalen zwischen den entsprechenden Knoten speichert.

14. Datenkommunikations-Vorrichtung nach Anspruch 11, wobei die Leistungsmerkmale wenigstens eines aufweisen von Transportzeit, Paketverlust, Paketverzögerung und Jitter.

15. Datenkommunikations-Vorrichtung nach Anspruch 11, wobei die Nachrichten Diagnosetestnachrichten nach einem vorgegebenen Protokoll sind, die zum Erfassen und Berichten von Routing-Informationen ausgelegt sind, wobei die Vorrichtung aufweist:
eine Einrichtung zum Identifizieren bestimmter Pfade, die so betreibbar sind, dass sie signifikanten Nachrichtenverkehr transportieren;
eine Einrichtung zum Senden eines Satzes von Diagnosetestnachrichten an die identifizierten bestimmten Pfade, wobei die Diagnosetestnachrichten so betreibbar sind, dass sie das Senden einer Testantwort auslösen;
eine Einrichtung zum Analysieren, wenn eine Testantwort empfangen wird, der Testantwort, um Leistungsattribute des bestimmten Pfads zu bestimmen; und
eine Einrichtung zum Folgern, wenn die Testantwort nicht empfangen wird, eines Verbindungsproblems entlang des identifizierten bestimmten Pfads.

16. Datenkommunikations-Vorrichtung nach Anspruch 11, die des Weiteren aufweist:
eine Einrichtung zum Identifizieren einer Vielzahl von Knoten entlang eines Kandidatenpfads;
eine Einrichtung zum Senden einer Vielzahl von Diagnosetestnachrichten an wenigstens einen Knoten entlang des Kandidatenpfads;
eine Einrichtung zum Organisieren der empfangenen Testantworten gemäß dem Knoten, von dem sie empfangen wurden, wobei jeder der Knoten einen Hop entlang des Pfads definiert;
eine Einrichtung zum Analysieren der organisierten Testantworten entsprechend der gesendeten Diagnosetestnachrichten, um Routing-Merkmale der Hops entlang des Pfads zu berechnen; und
eine Einrichtung zum Berechnen, basierend auf einem Satz aufeinanderfolgend identifizierter Nachrichten, von erwarteter Leistung zwischen den entsprechenden Knoten.

17. Datenkommunikations-Vorrichtung nach Anspruch 11, die des Weiteren auf weist:
eine Einrichtung zum Identifizieren einer Vielzahl von Netzwerk-Pfaden als Kandidatenpfade zwischen einer Quelle und einem Ziel;
eine Einrichtung zum Anwenden der Netzwerk-Routing-Informationen auf die Vielzahl von Pfaden zwischen Knoten, um eine Laufzeit zwischen den ausgewählten Knoten zu berechnen;
eine Einrichtung zum Berechnen, für jeden der Kandidatenpfade, einer Gesamttransportzeit, die Nachrichtenverkehrsleistung zwischen der Quelle und dem Ziel für jeden der Kandidatenpfade angibt; und
eine Einrichtung zum Benennen eines bestimmten Kandidatenpfads als optimalen Pfad basierend auf der Gesamttransportzeit.

18. Datenkommunikations-Vorrichtung nach Anspruch 11, die des Weiteren aufweist:
eine Einrichtung zum Zählen eines Satzes von Dienstgüte-Schichtebenen, wobei die Dienstgüte-Ebenen eine erwartete Durchsatzleistung angeben;
eine Einrichtung zum Assoziieren jedes der Pfade mit einer Dienstgüte-Ebene;
eine Einrichtung zum Vergleichen der berechneten Leistungsattribute mit der assoziierten Dienstgüte-Ebene, um Nachrichtenverkehr über einen bestimmten Pfad selektiv zu routen; und
eine Einrichtung zum Durchführen von Routing-Entscheidungen zum Routen des Nachrichtenverkehrs gemäß einer Dienstgüte-Ebene, die dem Nachrichtenverkehr zugeordnet werden kann.

19. Computerprogramm-Erzeugnis mit einem computerlesbaren Medium, das so betreibbar ist, dass es Computerprogrammlogik speichert, die ein einem darauf codierten Computerprogrammcode enthalten ist, um Netzwerk-Routing-Pfade zu identifizieren, mit:
einem Computerprogrammcode zum Durchführen eines Verfahrens nach einem der Ansprüche 1 bis 10.

## Revendications

1. Procédé d'identification de chemins de routage de réseau, comprenant :
la collecte d'informations de routage de réseau indicatives de caractéristiques de performance entre des noeuds de réseau (130) ;
l'agrégation des informations de routage identifiées en fonction d'au moins une caractéristique de performance ; et
l'application des informations de routage agrégées à des décisions de routage pour des chemins de réseau (160) entre les noeuds de réseau en identifiant les chemins de réseau correspondant à des caractéristiques de performance favorables, les chemins de réseau étant définis par une pluralité des noeuds de réseau ; **caractérisé en ce que** le procédé comprend en outre :
la spécification des caractéristiques de performance à mesurer en fonction de critères de qualité de service, QOS, prédéterminés ;
l'étape de collecte comprenant l'identification d'une pluralité de chemins de réseau (160-1, 160-2) en tant que chemins candidats entre une source (130-3) et une destination (130-8) ;
l'étape d'agrégation comprenant le calcul, à partir des informations de routage, pour chacun des chemins candidats, d'une performance agrégée indicative d'une performance de trafic de messages entre la source et la destination sur ce chemin candidat ; et
l'étape d'application comprenant le routage de trafic de réseau sur un chemin candidat ayant une performance agrégée cohérente avec des critères de QOS particuliers.

2. Procédé selon la revendication 1, dans lequel l'agrégation comprend en outre :
l'identification de messages ayant des attributs indicatifs de caractéristiques de performance ;
l'analyse syntaxique des attributs pour extraire les informations de routage correspondant aux caractéristiques de performance, des informations de routage correspondant à des caractéristiques entre un noeud particulier et au moins un autre noeud ; et
la mémorisation des informations de routage extraites en fonction des caractéristiques de performance entre les noeuds respectifs.

3. Procédé selon la revendication 1, les caractéristiques de performance comprenant au moins un élément parmi un temps de transport, une perte de paquets, un retard de paquets et une gigue.

4. Procédé selon la revendication 1, dans lequel la collecte comprend en outre :
l'identification de chemins particuliers exploitables pour transporter un trafic de messages significatif ;
l'examen, sur les chemins particuliers identifiés, de messages ayant les attributs indicatifs de caractéristiques de performance ; et
l'exploration des messages examinés pour récupérer les attributs.

5. Procédé selon la revendication 4, dans lequel les messages sont des messages de sondes de diagnostic adaptés pour collecter et rapporter des informations de routage, comprenant en outre :
l'envoi d'un ensemble de messages de sondes de diagnostic aux chemins particuliers identifiés, les messages de sondes de diagnostic étant exploitables pour déclencher l'envoi d'une réponse de sonde ;
l'analyse, si une réponse de sonde est reçue, de la réponse de sonde pour déterminer des attributs de performance du chemin particulier ; et
la conclusion, si la réponse de sonde n'est pas reçue, d'un problème de connectivité le long du chemin particulier identifié.

6. Procédé selon la revendication 1, comprenant en outre:
l'identification d'une pluralité de noeuds le long d'un chemin candidat ;
l'envoi d'une pluralité de messages de sondes de diagnostic à au moins un noeud le long du chemin candidat ;
l'organisation des réponses de sondes reçues en fonction du noeud à partir duquel elles ont été reçues, chacun des noeuds définissant un bond le long du chemin ; et
l'analyse des réponses de sondes organisées correspondant aux messages de sondes de diagnostic envoyés pour calculer des caractéristiques de routage des bonds le long du chemin.

7. Procédé selon la revendication 6, comprenant en outre le calcul, sur la base d'un ensemble de messages identifiés successivement, d'une performance prévue entre les noeuds respectifs.

8. Procédé selon la revendication 7, dans lequel la collecte d'informations de routage de réseau comprend en outre :
la réception de messages d'annonce d'état de liaison, LSA, les messages LSA ayant des attributs indicatifs d'informations de routage ; et
l'accumulation des informations de routage de réseau collectées ; et l'analyse des informations de routage de réseau pour identifier des caractéristiques de chemin.

9. Procédé selon la revendication 1, comprenant en outre :
l'identification d'une pluralité de chemins de réseau en tant que chemins candidats entre une source et une destination ;
l'application des informations de routage de réseau à la pluralité de chemins entre des noeuds pour calculer un temps de propagation entre les noeuds sélectionnés ;
le calcul, pour chacun des chemins candidats, d'un temps de transport agrégé indicatif d'une performance de trafic de messages entre la source et la destination pour chacun des chemins candidats ; et
l'indication d'un chemin candidat particulier en tant que chemin optimal sur la base du temps de transport agrégé.

10. Procédé selon la revendication 1, dans lequel l'application comprend en outre :
l'énumération d'un ensemble de niveaux à gradins de qualité de service, QOS, les niveaux de QOS étant indicatifs d'une performance de débit prévue ;
l'association de chacun des chemins à un niveau de QOS ; et
la comparaison des attributs de performance calculés avec le niveau de QOS associé pour acheminer sélectivement un trafic de messages sur un chemin particulier.

11. Dispositif de communication de données (130-3) ayant un processeur de diagnostic (140) pour analyser des chemins de routage de réseau, comprenant :
des moyens pour collecter des informations de routage de réseau indicatives de caractéristiques de performance entre des noeuds de réseau (130) ;
des moyens pour agréger les informations de routage identifiées en fonction d'au moins une caractéristique de performance ; et
des moyens pour appliquer les informations de routage agrégées à des décisions de routage pour des chemins de réseau (160) entre les noeuds de réseau en identifiant les chemins de réseau correspondant à des caractéristiques de performance favorables, les chemins de réseau étant définis par une pluralité de noeuds de réseau ; **caractérisé en ce que** le dispositif comprend en outre :
des moyens pour spécifier les caractéristiques de performance à mesurer en fonction de critères de qualité de service, QOS, prédéterminés ;
les moyens de collecte comprenant des moyens pour identifier une pluralité de chemins de réseau (160-1, 160-2) en tant que chemins candidats entre une source (130-3) et une destination (130-8) ;
les moyens d'agrégation comprenant des moyens pour calculer, à partir des informations de routage, pour chacun des chemins candidats, une performance agrégée indicative d'une performance de trafic de messages entre la source et la destination sur ce chemin candidat ; et
les moyens d'application comprenant des moyens pour acheminer le trafic de réseau sur un chemin candidat ayant une performance agrégée cohérente avec des critères de QOS particuliers.

12. Dispositif de communication de données selon la revendication 11, comprenant :
un renifleur d'attributs (142) exploitable pour collecter les informations de routage de réseau ;
un agrégateur de caractéristiques (146) exploitable pour agréger les informations de routage identifiées ; et
un programmateur de chemins (144) exploitable pour appliquer les informations de routage agrégées à des décisions de routage pour des chemins de réseau.

13. Dispositif de communication de données selon la revendication 11, comprenant en outre :
des moyens pour effectuer l'analyse syntaxique des attributs pour extraire les informations de routage correspondant aux caractéristiques de performance, des informations de routage correspondant à des caractéristiques entre un noeud particulier et au moins un autre noeud, comprenant en outre un répertoire mémorisant les informations de routage extraites en fonction des caractéristiques de performance entre les noeuds respectifs.

14. Dispositif de communication de données selon la revendication 11, dans lequel les caractéristiques de performance comprennent au moins un élément parmi un temps de transport, une perte de paquets, un retard de paquets et une gigue.

15. Dispositif de communication de données selon la revendication 11, dans lequel les messages sont des messages de sondes de diagnostic en fonction d'un protocole prédéterminé adapté pour collecter et rapporter des informations de routage, le dispositif comprenant :
des moyens pour identifier des chemins particuliers exploitables pour transporter un trafic de messages significatif ;
des moyens pour envoyer un ensemble de messages de sonde de diagnostic aux chemins particuliers identifiés, les messages de sondes de diagnostic étant exploitables pour déclencher l'envoi d'une réponse de sonde ;
des moyens pour analyser, si une réponse de sonde est reçue, la réponse de sonde pour déterminer des attributs de performance du chemin particulier ; et
des moyens pour conclure, si la réponse de sonde n'est pas reçue, un problème de connectivité le long du chemin particulier identifié.

16. Dispositif de communication de données selon la revendication 11, comprenant en outre :
des moyens pour identifier une pluralité de noeuds le long d'un chemin candidat ;
des moyens pour envoyer une pluralité de messages de sondes de diagnostic à au moins un noeud le long du chemin candidat ;
des moyens pour organiser les réponses de sondes reçues en fonction du noeud à partir duquel elles ont été reçues, chacun des noeuds définissant un bond le long du chemin ;
des moyens pour analyser les réponses de sondes organisées correspondant aux messages de sondes de diagnostic envoyés pour calculer des caractéristiques de routage des bonds le long du chemin ; et
des moyens pour calculer, sur la base d'un ensemble de messages identifiés successivement, une performance prévue entre les noeuds respectifs.

17. Dispositif de communication de données selon la revendication 11, comprenant en outre :
des moyens pour identifier une pluralité de chemins de réseau en tant que chemins candidats entre une source et une destination ;
des moyens pour appliquer les informations de routage de réseau à la pluralité de chemins entre des noeuds pour calculer un temps de propagation entre les noeuds sélectionnés ;
des moyens pour calculer, pour chacun des chemins candidats, un temps de transport agrégé indicatif d'une performance de trafic de messages entre la source et la destination pour chacun des chemins candidats ; et
des moyens pour indiquer un chemin candidat particulier en tant que chemin optimal sur la base du temps de transport agrégé.

18. Dispositif de communication de données selon la revendication 11, comprenant en outre :
des moyens pour énumérer un ensemble de niveaux à gradins de qualité de service, QOS, les niveaux de QOS étant indicatifs d'une performance de débit prévue ;
des moyens pour associer chacun des chemins à un niveau de QOS ;
des moyens pour comparer les attributs de performance calculés avec le niveau de QOS associé pour acheminer sélectivement un trafic de messages sur un chemin particulier ; et
des moyens pour effectuer des décisions de routage pour acheminer le trafic de messages en fonction d'un niveau de QOS attribuable au trafic de messages.

19. Produit de programme informatique ayant un support lisible par ordinateur exploitable pour stocker une logique de programme d'ordinateur mise en oeuvre dans un code de programme d'ordinateur codé sur celui-ci pour identifier des chemins de routage de réseau, comprenant :
un code de programme d'ordinateur pour exécuter un procédé selon l'une quelconque des revendications 1 à 10.
